# EUROPÄISCHE PATENTSCHRIFT

(11) **EP 1 386 532 B1**
(45) Veröffentlichungstag und Bekanntmachung des Hinweises auf die Patenterteilung: **15.11.2006**
(21) Anmeldenummer: 02078179.5
(22) Anmeldetag: 03.08.2002
(51) Int. Cl.: A01F 15/07

(54) **Vorrichtung zum Umhüllen von Körpern**
Device for wrapping of articles
Dispositif d'enveloppement d'articles

(43) Veröffentlichungstag der Anmeldung: 04.02.2004
(73) Patentinhaber: Welger Maschinenfabrik GmbH, 38304 Wolfenbüttel (DE)
(72) Erfinder: Reupke, Harald, 38275 Steinlah (DE)
(74) Vertreter: Corten, Maurice Jean F.M.

(56) Entgegenhaltungen:
- EP-A- 0 543 145
- EP-A- 0 937 384
- EP-A- 0 983 720
- EP-A- 1 210 861
- WO-A-97/18699
- DE-A- 3 311 279
- US-A- 5 822 967

## Beschreibung

Die Erfindung betrifft eine Vorrichtung zum Umhüllen von Körpern mit Folie, bestehend aus einem um den Körper um eine Drehachse rotierend antreibbaren, wenigstens zweiarmigen Ausleger, welcher an jedem Armende wenigstens eine Folienrolle trägt. Die Erfindung betrifft ferner ein Verfahren zum Umhüllen von Körpern.

Die vorstehend beschriebene Vorrichtung lässt sich der DE 197 31 520 A1 entnehmen. Hier sind zwei Folienrollen diametral gegenüberliegend an einem zweiarmigen Ausleger angeordnet, der mittig um eine vertikale Drehachse rotierend antreibbar ist. Jeder Folienrolle ist eine seitlich ortsfest angeordnete Schneid-Klemmeinrichtung zugeordnet. Mit dieser Vorrichtung lässt sich die Umhüllzeit gegenüber den Einarmwicklern" verkürzen. Bei Kombinationen von Pressen und Folienwickelvorrichtungen ist die Umhüllzeit bei großen Pressendurchsatzleistungen in Relation zur Presszeit zu hoch, so dass Stillstandszeiten der Presse die Folge sind. Darüber hinaus lässt sich beispielsweise durch Erhöhung der Auslegerdrehzahl keine Verkürzung der Umhüllzeit mehr erzielen, weil diese bereits an der oberen Grenze ist. Es wäre vorteilhaft, die Auslegerdrehzahl etwas zu reduzieren, weil dann weniger Luft mit eingeschlagen würde.

In der PCT WO 00/15023 wird eine Rundballenpresse mit integrierter Vorrichtung zum Umhüllen des in der Rundballenpresse befindlichen Rundballens dargestellt und beschrieben. Hierbei sind jeweils zwei Folienrollen hängend und umfangsversetzt an zwei Drehkränzen angeordnet, die durch je einen Antriebsmotor relativ zueinander bewegbar sind. Die Folienrollen sollen während des Umhüllvorganges über den Umfang mit 90° Winkelabstand gleichmäßig verteilt sein. Um den fertig umhüllten Ballen auswerfen zu können, werden zwei Folienrollen nacheinander in eine auf beiden Seiten des Ballens angeordnete Schneid-Klemmeinrichtung bewegt. Als nachteilig erweist sich der verhältnismäßig aufwendige Aufbau der Umhüllvorrichtung sowie die Steuerung der Drehkränze. Ferner besteht der große Nachteil, dass das System für eine Verwendung außerhalb einer Presse ungeeignet ist, weil diese Konstruktion die Bauabmessungen erheblich vergrößern würde. Der zu umwickelnde Ballen müsste unter den Drehkränzen geladen und entladen werden. Alternativ müßten die Drehkränze zusätzlich um eine horizontale Achse verschwenkbar ausgebildet sein.

Der Erfindung liegt die Aufgabe zugrunde, die eingangs beschriebene Vorrichtung und das entsprechende Verfahren zum Umhüllen von Körpern zu verbessern.

Diese Aufgabe wird durch eine Vorrichtung mit den Merkmalen des Patentanspruchs 1 und durch ein Verfahren mit den Merkmalen des Patentanspruchs 14 gelöst.

Durch die Verstellbarkeit wenigstens eines Auslegerarmes relativ zu einem oder mehreren AuslegeramU-en lässt sich nunmehr trotz Verwendung dreier oder mehrerer einfacher Auslegerarme mit jeweils einer Folienrolle jeder Ballen problemlos auf die Umhüllvorrichtung laden und nach dem Umwickeln mit Folie wieder entladen. Das gleichzeitige Umwickeln mit mehr als zwei Folienrollen verkürzt die Umhüllzeit und reduziert die Stillstandszeiten, weil ein Folienrollenwechsel z.B. bei vier Auslegerarmen erst nach der doppelten Ballenzahl relativ zum Zweiarmwickler notwendig ist. Anderereseits kann auch die Drehzahl des Auslegers reduziert werden, wodurch beim Wickeln weniger Luftblasen zwischen den Folienschichten entstehen. Die Umhüllvorrichtung ist separat oder auch in Kombination mit einer vorgeschalteten Rundballenpresse betreibbar. Die Verstellung des Auslegerarmes erfordert keine besondere konstruktive Gestaltung; der Ausleger kann durch eine einfache Gelenkverbindung verschwenkbar ausgestaltet sein. Darüber hinaus ergibt sich der große Vorteil, dass jeweils zwei Folienrollen bzw. Folien einer an sich bekannten Schneid-Klemmeinrichtung zugeordnet werden können.

Eine einfache Konstruktion ist gekennzeichnet durch einen dreiarmigen Ausleger mit einem verschwenkbaren Auslegerarm. Grundsätzlich ist es möglich, die Steuerung der Verstellung des Auslegerarmes durch Anschlag- oder Verriegelungsmittel vorzunehmen. Zur Verstellung eines Auslegerarmes relativ zu einem oder mehreren Auslegerarm/-en kann beispielsweise ein Hydrospeicher oder ein einfachwirkender Hydrozylinder verwendet werden, welcher zwischen einem festen und einem verschwenkbaren Auslegerarm angeordnet ist. Vorzugsweise werden bei Beendigung des Umhüllvorganges zwei aufeinander folgende Auslegerarme vorher zusammengeschwenkt und gemeinsam gleichzeitig in die Schneid-Klemmeinrichtung gefahren.

Eine bevorzugte Ausgestaltung der Erfindung insbesondere hinsichtlich der Wickelleistung wird durch einen vierarmigen Auslegerarm mit zwei verschwenkbaren Auslegerarmen erreicht. Während des Umhüllbetriebes sind die Auslegerarme auf dem ganzen Umfang gleichmäßig verteilt mit jeweils 90° Versatz angeordnet. Die Steuerung erfolgt derart, dass bei Beendigung des Umhüllvorganges zunächst ein erster Auslegerarm in Wickel-Drehrichtung zur Schneid-Klemmeinrichtung für eine Folie gefahren wird, dann der zweite Auslegerarm bei angehaltenem ersten Auslegerarm in derselben Drehrichtung weiterbewegt wird bis in eine zum ersten Auslegerarm benachbarte Stellung, in der beide Folien gemeinsam von der Schneid-Klemmvorrichtung gehalten werden. Hierbei ist nur ein in einer Drehrichtung antreibbarer Antriebsmotor notwendig. Da nach Start des Umhüllvorganges zunächst der erste Auslegerarm losfährt und erst den zweiten Auslegerarm mitnimmt, wenn dieser einen vorbestimmten Winkelabstand zum ersten Auslegerarm einnimmt, bleibt die auf den Ballen aufzubringende Folie stets im optimal gespannten Zustand, da keine Folienlose entstehen kann, wie es beispeilsweise beim Rückwärtsdrehen eines Auslegers der Fall wäre.

Der verstellbare Auslegerarm kann geschoben oder gezogen werden relativ zum angetriebenen Auslegerarm. Die geschobene Ausführung hat den Vorteil, dass der treibene Auslegerarm bei Störungen noch den schwenkbaren Auslegerarm aus dem Entladebereich schieben kann, so dass der Ballen immer entladen werden kann.

Im folgenden wird die Erfindung anhand von Ausführungsbeispielen näher erläutert.Es zeigt:
Fig. 1: eine Draufsicht auf eine Umhüllvorrichtung mit drei in Vollinie gezeichneten Auslegerarmen während des Umhüllbetriebes und in Strichlinie gezeichnet einen verschwenkten Auslegerarm vor Beendigung der Umhüllung,
Fig. 2 eine Ansicht gemäß Fig. 1 mit in Schneid /Klemmstellung dargestellten Auslegerarmen,
Fig. 3 eine Draufsicht auf ein zweites Ausführungsbeispiel einer Umhüllvorrichtung mit vier Auslegerarmen während des Umhüllbetriebes,
Fig. 4 eine Ansicht gemäß Fig.3 mit in Schneid/Klemmstellung dargestellten Auslegerarmen,
Fig. 5 eine Ansicht gemäß Fig. 3 mit zusammengeschwenkten Auslegerarmen,
Fig. 6 eine schematische Darstellung eines dritten Ausführungsbeispieles einer Umhüllvorrichtung in perspektivischer Ansicht mit vier Auslegerarmen,
Fig. 7 eine Ansicht gemäß Fig. 6 während der Ballenumhüllung,
Fig. 8 eine Ansicht gemäß Fig. 6 mit in Schneid/Klemmstellung gezeichneten, zusammengeschwenkten Auslegerarmen und
Fig. 9 eine Ansicht gemäß Figur 8 während des Starts eines neuen Umhüllvorganges.

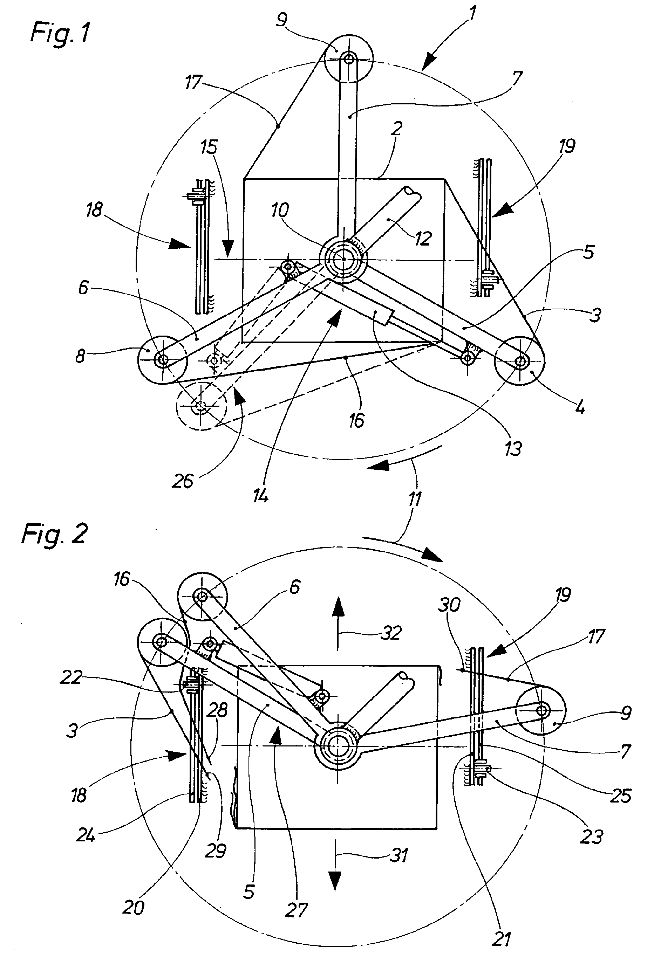

In Fig. 1 ist eine Draufsicht auf eine Folienumhüllvorrichtung 1 zum Umwickeln eines Ballens 2 mit einer Folie 3 dargestellt, insbesondere eines aus Erntegut wie Silage oder Mais oder aus Altpapier, Müll, Altkleidern bestehenden Rundballens. Diese Folie 3 ist von einer Folienrolle 4 über nicht gezeichnete Stretchrollen und Führungen abziehbar. Die Folienrolle 4 ist am äußeren Ende eines Auslegerarmes 5 angeordnet. Um den Umwicklungsvorgang zu beschleunigen, sind zwei weitere Auslegerarme 6, 7 vorgesehen, die an ihren Enden jeweils eine Folienrolle 8, 9 tragen. Die Auslegerarme 5, 6, 7 sind während des Umwicklungsvorganges im Abstand von 120° umfangsversetzt gleichmäßig verteilt und durch einen nicht dargestellten Drehantrieb um eine vertikale Drehachse 10 in Richtung des Pfeiles 11 antreibbar in einem Rahmengestell 12 drehbar gelagert. Zwei Auslegerarme 6, 7 sind starr miteinander verbunden, während der Auslegerarm 5 um eine zur Drehachse 10 koaxiale Schwenkachse relativ zu den Auslegerarmen 6, 7 verschwenkbar gelagert ist. Zwischen Auslegerarm 5 und Auslegerarm 6 ist ein Hydrozylinder 13 angeordnet. In ausgefahrener, in Volllinie gezeichneter Stellung des Hydrozylinders 13 ist der Auslegerarm 5 um 120° in Drehrichtung 11 umfangsversetzt zum Auslegerarm 7. Die Folienrollen 4, 8, 9 an den Enden der Auslegerarme 5, 6, 7 umkreisen den Ballen 2, der sich vorzugsweise dabei um eine horizontale Achse 15 dreht, so dass drei Folien 3, 16, 17 gleichzeitig von den Folienrollen 4, 8, 9 abgezogen werden, um eine schichtweise Umwickelung des Ballens 2 mit Folie zu erreichen.

Auf beiden Seiten des Ballens 2 ist eine an sich bekannte Schneid-/Klemmeinrichtung 18, 19 für die Folie angeordnet. Jede Schneid-/Klemmeinrichtung 18, 19 besteht aus einer horizontalen, ortsfest angeordneten Schneid- und Klemmleiste 20, 21 und einem um eine horizontale Querachse 22, 23 mittels nicht gezeichneter Stelleinrichtung nach oben in die Umlaufbahn der Folie schwenkbaren Fangarm 24, 25. Während des Umhüllbetriebes liegt jeder Fangarm 24, 25 auf der Schneid- und Klemmleiste 20, 21 unterhalb der Umlaufbahn der Folie.

Kurz vor Beendigung des Umhüllvorganges fährt der Hydrozylinder 13 zusammen und schwenkt hierbei den Auslegerarm 5 in die in Figur 1 gestrichelt gezeichnete Stellung 26, in der sich beide Folienrollen 8, 4 hintereinander befinden. Gleichzeitig gehen die Fangarme 24, 25 nach oben, so dass die beiden Folien 3, 16 und die Folie 17 während der Weiterdrehung der Arme 5, 6, 7 in die in Fig 2 gezeichnete Auslegerarmstellung 27 nicht mehr um den Ballen 2 gewickelt, sondern die Folien 3, 16 um den Fangarm 24 und die Folie 17 um den Fangarm 25 gelegt werden/wird. In dieser Auslegerarmstellung 27 wird der Drehantrieb der Auslegerarme 5, 6, 7 abgeschaltet, die Fangarme 24, 25 gehen zu und halten die abgetrennten Folien 3, 16, 17 fest. Der Ballen 2 kann in Richtung der Pfeile 31, 32 entladen und ein neuer Ballen beladen werden.

Bei Start eines neuen Wickelvorganges werden die Auslegerarme 5, 6, 7 in Richtung des Pfeiles 11 angetrieben und der Hydrozylinder 13 fährt in die in Fig. 1 in Volllinie gezeichnete Wickelstellung aus.

Der Hydrozylinder 13 kann alternativ auch einfachwirkend ausgebildet sein und das Zurückschwenken des Auslegerarmes 5 durch ein Federelement bewerkstelligt werden.

Anstelle des Hydrozylinders 13 kann vorzugsweise ein elektrischer Aktuatormotor eingesetzt werden, der aufgrund seiner Selbsthemmung beim Zusammen- und Auseinanderschwenken stets eine gleichbleibende Folienspannung gewährleistet und nur mit einfachen elektrischen Signalen ansteuerbar ist.

Alternativ kann auch ein Hydrofederspeicherelement verwendet werden. Dabei wird der schwenkbare Auslegerarm 5 bei Beendigung des Wickelvorganges blockiert und ein fester Auslegerarm an den arretierten Auslegerarm geschwenkt, wodurch das Hydrofederspeicherelement gespannt wird. Nach Entriegelung des schwenkbaren Auslegerarmes fährt dieser selbsttätig in seine Wickelstellung.

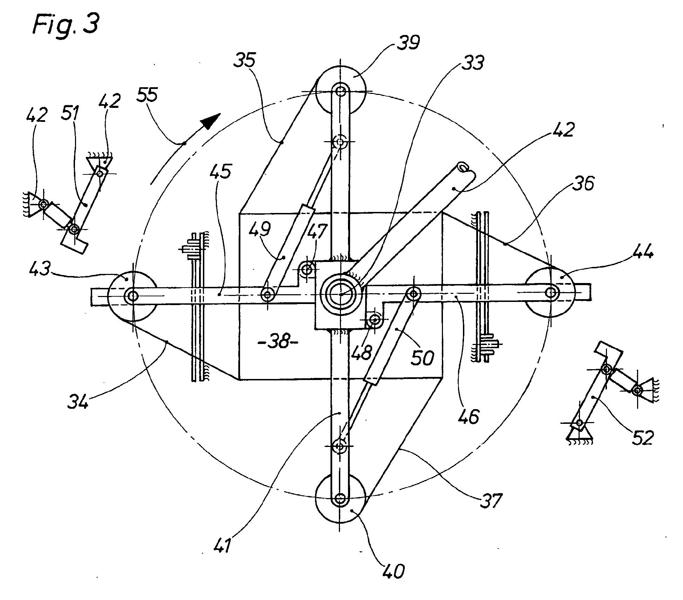

In Figur 3 ist eine Umhüllvorrichtung mit vertikaler Drehachse 33 dargestellt, bei der während des Umhüllvorganges gleichzeitig vier Folien 34, 35, 36, 37 um einen Ballen 38 gewickelt werden. Zwei Folienrollen 39, 40 sind an den gegenüberliegenden Enden eines zweiarmigen starren Auslegers 41 angeordnet, der mittig in einem Rahmengestell 42 gelagert ist und drehfest mit der Antriebswelle eines nicht dargestellten Antriebsmotors, vorzugsweise eines Hydromotors verbunden ist. Zwei weitere Folienrollen 43, 44 sind jeweils um 90° versetzt an Auslegerarmen 45, 46 angeordnet, die jeweils um eine Schwenkachse 47, 48 relativ zu dem starren Auslegerarm 41 verschwenkbar sind. Zwischen schwenkbaren Auslegerarmen 45, 46 und festem Ausleger 41 ist jeweils eine Gasdruckfeder 49, 50 angeordnet. Den schwenkbaren Auslegerarmen 45, 46 ist jeweils eine Verriegelungsklinke 51, 52 zugeordnet, die im Bereich je einer auf beiden Seiten des Ballens 38 angeordneten Schneid-/Klemmeinrichtung 53, 54 angeordnet sind, deren Funktion derjenigen aus den Figuren 1 und 2 entspricht. Während des Umhüllvorganges rotieren alle Folienrollen 39, 40, 43, 44 der in Figur 3 dargestellten Stellung in Richtung des Pfeiles 55 um den Ballen 38.

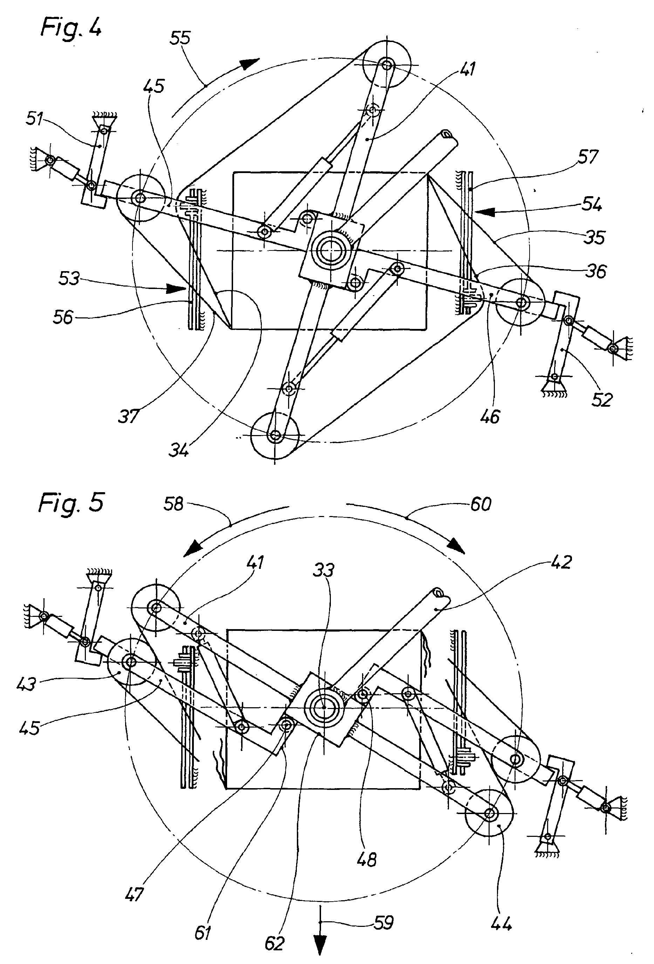

Ist der Ballen 38 fertig umhüllt, werden die Fangarme 56, 57 jeder Schneid-/Klemmeinrichtung 53, 54 nach oben in die Umlaufbahn der Folien 34, 37 und 36, 35 geschwenkt. Nach Weiterdrehung des Auslegers 41 in die in Figur 4 gezeigte Stellung wird der Drehantrieb des Auslegers 41 durch einen dessen Position erfassenden Sensor abgeschaltet und die Fangarme 45, 46 geschlossen. Gleichzeitig werden durch Hubmagneten oder Stellzylinder die Verriegelungsklinken 51, 52 in die Umlaufbahn der Auslegerarme 45, 46 geschwenkt, so dass deren Rückwärtsdrehung gesperrt ist. Die Drehrichtung des Hydromotors wird durch Betätigung eines Hydroventils umgekehrt. Bei Drehung des Auslegers 41 in Richtung des Pfeiles 58 schwenken die von den Verriegelungsklinken 51, 52 gehaltenen Auslegerarme 45, 46 um deren Schwenkachsen 47, 48 in die in Figur 5 dargestellte Stellung. Die Gasdruckfedern 49, 50 begrenzen den Schwenkweg der Auslegerarme 45, 46. Der Ballen 38 kann nun in Richtung des Pfeiles 59 entladen und ein neuer Ballen geladen werden.

Zum Start eines neuen Wickelvorganges wird der Ausleger 41 in Richtung des Pfeiles 60 gedreht. Die Auslegerarme 45, 46 bleiben aufgrund der Folienspannung solange stehen, bis die Anschlagflächen 61, 62 aneinanderliegen und der Wickelvorgang in der in Figur 3 gezeigten Stellung der Auslegerarme 41, 45, 46 ablaufen kann.

Anstelle der klappbaren Auslegerarme 45, 46 kann auch ein koaxial zum Ausleger 41, verdrehbarer Ausleger verwendet werden. Die 90° Verstellung kann durch eine Stift/Langlochführung oder eine Schraube/Mutter Verbindung bewerkstelligt werden, wobei der eine Ausleger das eine Element und der andere Ausleger das andere Element aufweist.

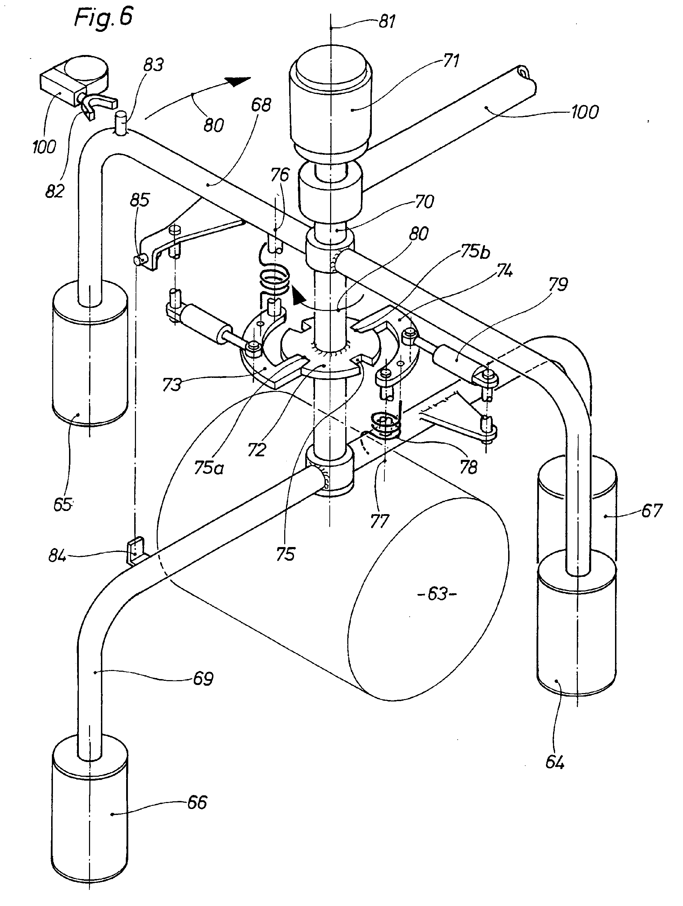

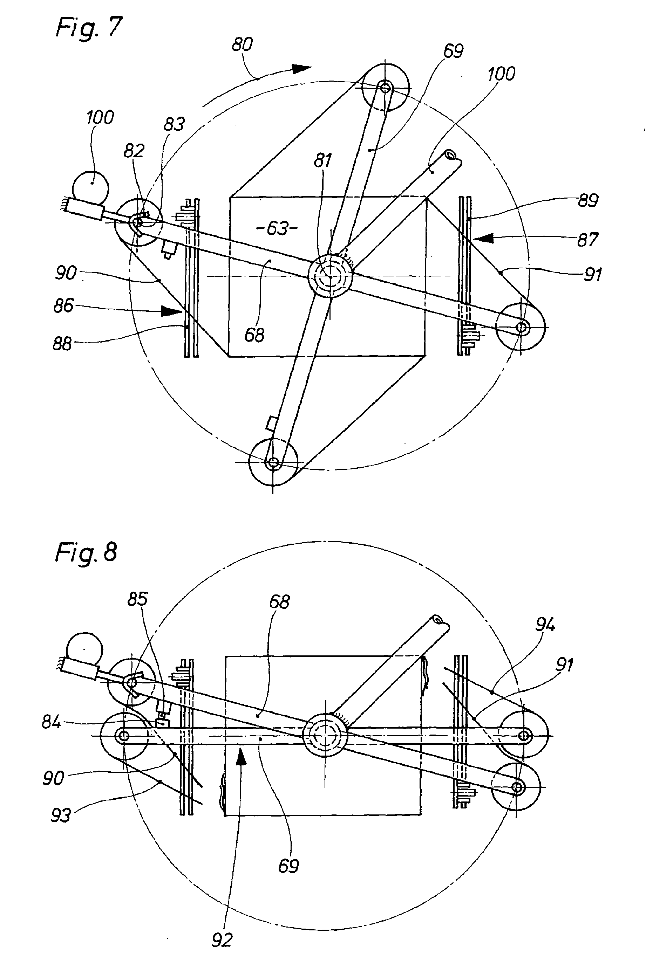

Bei dem in Figur 6 in perspektivischer Ansicht dargestellten Ausführungsbeispiel erfolgt die Umwicklung eines Ballens 63 mittels vier Folienrollen 64 bis 67, von denen jeweils zwei Folienrollen 64, 65 und 66, 67 an einem starren zweiarmigen Ausleger 68, 69 angeordnet sind. Jeder Ausleger 68, 69 ist koaxial drehbar auf einer Antriebswelle 70 eines Hydromotors 71 gelagert, welcher an einem Rahmengestell 100 befestigt ist. Die Mitnahme der Ausleger 68, 69 erfolgt durch eine Rasterscheibe 72, die drehfest mit der Antriebswelle 70 verbunden ist und mittels zwei Sperrklinken 73, 74, die mit der Rasterscheibe 72 zusammenwirken. Die Rasterscheibe 72 hat auf ihrem Umfang im Abstand von 90° gleichmäßig verteilt vier Ausnehmungen 75. Eine Sperrklinke 73 ist an dem einen Ausleger 68 um eine Achse 76 schwenkbar gelagert, während die andere 74 an dem anderen Ausleger 69 um eine Achse 77 schwenkbar gelagert ist. Beide Sperrklinken 73, 74 werden durch je eine Feder 78 gegen die Rasterscheibe 72 gezogen und sind durch je einen Hubmagneten 79 betätigbar, der jeweils zwischen Ausleger 68 und Sperrklinke 73 bzw. Ausleger 69 und Sperrklinke 74 angelenkt ist und mit einer nicht dargestellten Steuervorrichtung in Wirkverbindung steht. Die Sperrklinken 73, 74 sind so angeordnet, dass diese bei Antrieb der Rasterscheibe 72 in Richtung des Pfeiles 80 geschoben werden. Während des Umwicklungsvorganges greifen beide Sperrklinken 73, 74 in jeweils eine Ausnehmung 75 der Rasterscheibe 72 ein. Der Eingriff der Sperrklinken 73, 74 erfolgt dabei in diesem Beispiel in um 180° versetzte Ausnehmungen 75a, 75b, so dass die Ausleger 68, 69 während des Umwicklungsvorganges um 90° zueinander versetzt angeordnet sind und um eine vertikale Drehachse 81 um den Ballen 63 rotieren, siehe Figuren 6 und 7. Dem Ausleger 68 ist an einem Ende eine betätigbare Verriegelungsklinke 82 zugeordnet, die während des Umhüllvorganges außerhalb der Umlaufbahn eines an dem Ausleger 68 befestigten Zapfens 83 ist. An den Auslegern 68, 69 sind Anschläge 84, 85 vorgesehen, von denen wenigstens ein Anschlag 85 als Sensor ausgebildet ist, um das Zusammenschwenken der Ausleger 68, 69, siehe Fig. 8, zu begrenzen und ein Signal an die Steuerung zu senden, wenn die Ausleger 68, 69 in ihrer Position gemäß Fig. 8 sind.

Zur besseren Veranschaulichung des Ablaufes sind in den Figuren 7 bis 9 nur die Ausleger 68, 69 und die Schneid/Klemmeinrichtungen 86, 87 sowie die Folienläufe um den Ballen 63 in Draufsicht in schematischer Darstellung gezeichnet. Der Vorteil dieser Lösung besteht darin, dass nur ein in einer Drehrichtung 80 antreibbarer Antriebsmotor 71 erforderlich ist und keine Folienlose durch Rückwärtsdrehung eines Auslegerarmes entsteht.

Kurz vor Ende des Wickelvorganges werden die Fangarme 88, 89 bei Drehung der Ausleger 68, 69 in durch Pfeil 80 gekennzeichnete Richtung hochgeschwenkt und die Folien 90, 91 des Auslegers 68 um die Fangarme 88, 89 gelegt, wie in Fig. 7 ersichtlich. Ein nicht dargestellter Sensor erkennt die Position des Auslegers 68 und gibt ein Signal zum Ausschwenken der Sperrklinke 73 und Einschwenken der Verriegelungsklinke 82, wodurch der Ausleger 68 in der in Fig. 7 gezeichneten Stellung stehen bleibt. Der Hydromotor 71 bleibt solange eingeschaltet bis der zweite Ausleger 69 in die in Figur 8 gezeichnete Stellung 92 gedreht ist, in der der Sensor 85 am Anschlag 84 anliegt und den Hydromotor 81 abschaltet. Die Fangarme 88, 89 gehen nach unten und trennen die Folien 90, 91 und 93, 94 der Ausleger 68, 69 ab. Der Ballen 63 kann entladen werden.

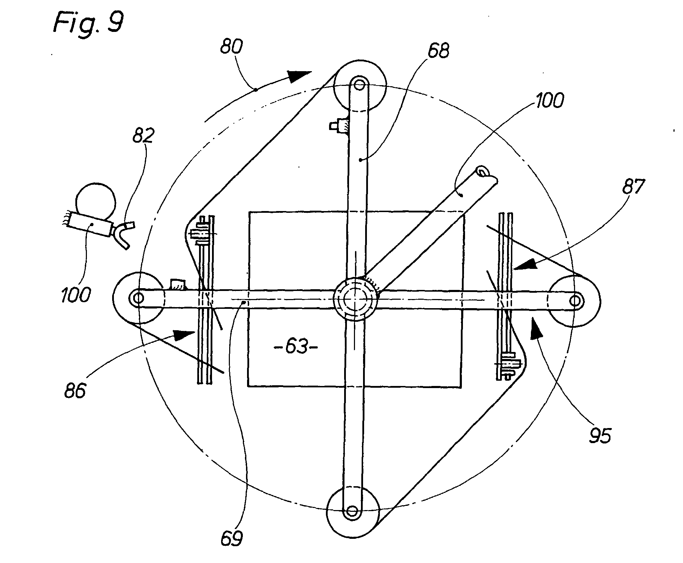

Beim erneuten Einschalten des Hydromotors 71 wird sofort die Sperrklinke 74 des zweiten Auslegers 69 entriegelt, worauf dieser aufgrund der Folienzugkräfte in der in Figur 9 gezeigten Stellung 95 stehen bleibt. Die Sperrklinke 73 des ersten Auslegers 68 rastet sofort in die nächste Ausnehmung ein und dreht den ersten Ausleger 68 in Richtung des Pfeiles 80 weiter. Sobald der erste Ausleger 68 einen Winkelabstand von 90° zum zweiten Ausleger 69 erreicht hat, rastet dessen Sperrklinke 74 aufgrund der Feder 78 selbsttätig ein, so dass beide Auslegerarme 68, 69 in 90° versetzter Stellung formschlüssig mit der Rasterscheibe 72 und damit mit der Antriebswelle 70 verbunden sind und der Wickelprozess ablaufen kann.

In einer anderen, nicht dargestellten Ausführungsform könnte die Steuerung auch über eine ortsfeste Verriegelungswippe mit zwei Verriegelungsklinken derart erfolgen, dass eine Verriegelungsklinke der Verriegelungswippe in deren erster Stellung den einen Ausleger festhält bis der andere Ausleger herangefahren ist, worauf der Antrieb abschaltet. Beim erneuten Anfahren schwenkt die Verriegelungswippe in die zweite Stellung, lässt den ersten Ausleger los und verriegelt den zweiten Ausleger solange, bis dieser den richtigen Winkelabstand erreicht hat. Die Ausleger wären hierbei unter Krafteinwirkung, z.B. mittels einer Reibkupplung gegeneinander verdrehbar auf der Antriebswelle des Hydromotors gelagert.

Um bei Störungen in der Verstellung eines Auslegerarmes trotzdem im Notbetrieb einen Ballen wickeln und entladen zu können, ist eine nicht dargestellte Verriegelungklinke an einem Ausleger vorgesehen, die in zusammengeschwenkter Stellung der Ausleger in einen Verriegelungszapfen des anderen Auslegers einrastet und die Ausleger miteinander verriegelt.

Die Erfindung ist auch anwendbar bei Folienwickelvorrichtungen mit zweiarmigem starren Ausleger, der die Folie von nur zwei Folienrollen abzieht. Hierbei kann es zweckmäßig sein, einen der beiden Auslegerarme erfindungsgemäß zu verschwenken, um bei bestimmten Konstruktionen mit seitlichen Ballengreifarmen Kollisionen zwischen diesen und der zwischen Schneid-/Klemmvorrichtung und Folienrolle gespannten Folie zu vermeiden.

Es sei darauf hingewiesen, dass nicht nur Rundballen, sondern auch Quaderballen verschiedener Abmessungen und Materialien auf diese Art und Weise umwickelt werden können.

## Patentansprüche

1. Vorrichtung zum Umhüllen von Körpern (2, 38, 63), mit Folie (16, 17, 35, 37, 90, 91), bestehend aus einem um den Körper (2, 38, 63) um eine Drehachse (10, 33, 81) rotierend antreibbaren, wenigstens zweiarmigen Ausleger (6, 7, 41, 68), welcher an jedem Armende wenigstens eine Folienrolle (4, 9, 43, 44, 64, 65) trägt, **dadurch gekennzeichnet, dass** wenigstens ein Auslegerarm (5, 45, 46, 69) relativ zu einem oder mehreren Auslegerarm/-en (6, 7, 41, 68) verstellbar ist.

2. Vorrichtung nach Anspruch 1, **dadurch gekennzeichnet, dass** ein oder mehrere Auslegerarm/-e (5, 69) mittels zumindest einer Gelenkverbindung um eine zur Drehachse (10, 81) koaxiale Schwenkachse in Umfangsrichtung verstellbar ausgestaltet ist/sind.

3. Vorrichtung nach Anspruch 1 oder 2, **dadurch gekennzeichnet, dass** ein oder mehrere Auslegerarm/e (45, 46) mittels zumindest einer Gelenkverbindung um eine zur Drehachse (33) parallele Schwenkachse (47, 48) in Umfangsrichtung verstellbar ausgebildet ist/sind.

4. Vorrichtung nach einem oder mehreren der vorhergehenden Ansprüche, **dadurch gekennzeichnet, dass** die Verstellbewegung eines oder mehrerer Auslegerarme (41, 45, 46, 68, 69) direkt oder indirekt von wenigstens einem Drehantriebsmotor (81) abgeleitet ist.

5. Vorrichtung nach einem oder mehreren der vorhergehenden Ansprüche, **gekennzeichnet durch** Mittel zum Umkehren der Drehrichtung eines oder mehrerer Auslegerarmes/e (41, 45, 46).

6. Vorrichtung nach einem oder mehreren der vorhergehenden Ansprüche, **dadurch gekennzeichnet, dass** zur Verstellung wenigstens eines Auslegerarmes (5, 45, 46, 68, 69) relativ zu einem oder mehreren Auslegerarm/en (6, 41, 68, 69) ein mechanischer, hydraulischer (13, 81), elektrischer und/oder pneumatischer Stellantrieb vorgesehen ist.

7. Vorrichtung nach einem oder mehreren der vorhergehenden Ansprüche, **dadurch gekennzeichnet, dass** zwischen verschwenkbarem (5, 45, 46) und festem Auslegerarm (6, 7, 41) ein Energiespeicher (49, 50) und/oder ein Dämpferelement vorgesehen ist

8. Vorrichtung nach einem oder mehreren der vorhergehenden Ansprüche, **dadurch gekennzeichnet, dass** in dem Antrieb eines oder mehrerer Auslegerarmes/e (68, 69) wenigstens ein Kupplungselement, ein Klinkenschaltwerk (72 bis 79), ein Getriebe und/oder ein Freilauf vorgesehen ist.

9. Vorrichtung nach einem oder mehreren der vorhergehenden Ansprüche, **dadurch gekennzeichnet, dass** wenigstens ein Auslegerarm (5, 45, 46, 69) zur Begrenzung seiner Verstellbewegung in wenigstens einer Drehrichtung relativ zu einem oder mehreren Auslegerarm/-en (6, 7, 41, 68) Anschlag- (13, 49, 50, 61, 62, 84, 85) und/oder Verriegelungsmittel (73, 74) aufweist.

10. Vorrichtung nach einem oder mehreren der vorhergehenden Ansprüche, **dadurch gekennzeichnet, dass** wenigstens ein verstellbarer und ein fester Auslegerarm mittels eines Verriegelungselementes in zusammengeschwenkter Stellung fest verriegelbar sind, um den Ballen im Notbetrieb zu wickeln und zu entladen.

11. Vorrichtung nach einem oder mehreren der vorhergehenden Ansprüche, **dadurch gekennzeichnet, dass** Anschlag- und/oder Verriegelungsmittel (51, 52, 82, 83) für wenigstens einen Ausleger (45, 46, 68) dem Rahmengestell (42, 100) zugeordnet sind.

12. Vorrichtung nach einem oder mehreren der vorhergehenden Ansprüche, **gekennzeichnet durch** einen dreiarmigen Ausleger (5, 6, 7) mit einem verschwenkbaren Auslegerarm (5).

13. Vorrichtung nach einem oder mehreren der vorhergehenden Ansprüche 1-11, **gekennzeichnet durch** einen vierarmigen Auslegerarm (41, 45, 46, 68, 69) mit zwei verschwenkbaren Auslegerarmen (45, 46, 69).

14. Verfahren zum Umhüllen von Körpern (2, 38, 63) mit Folie (16, 35, 37, 90, 91), bei dem ein wenigstens zweiarmiger Ausleger (6, 9, 41, 68), der an jedem Armende wenigstens eine Folienrolle (4, 9, 43, 44, 64, 65) trägt, um den Körper (2, 38, 63) um eine Drehachse (10, 33, 81) rotierend angetrieben wird, **dadurch gekennzeichnet, dass** wenigstens ein Auslegerarm (5, 45, 46, 69) relativ zu einem oder mehreren Auslegerarm(en) (6, 7, 41, 68) bei Beendigung des Umhüllvorganges verstellt wird.

15. Verfahren nach Anspruch 14, **dadurch gekennzeichnet, dass** bei Beendigung des Umhüllvorganges zunächst ein erster Auslegerarm (68) in Wickel-Drehrichtung (80) zur Schneid-Klemmrichtung (86, 87) für eine Folie (90, 91) gefahren wird, dann der zweite Auslegerarm (69) bei angehaltenem ersten Auslegerarm (68) in derselben Drehrichtung (80) weiterbewegt wird bis in eine zum ersten Auslegerarm (68) benachbarte Stellung (92), in der zwei Folien (90, 91 und 93, 94) jeweils von einer Schneid-Klemmeinrichtung (86, 87) gehalten werden.

16. Verfahren nach Anspruch 14, **dadurch gekennzeichnet, dass** bei Beendigung des Umhüllvorganges ein zweiter, einem in Drehrichtung (55) gesehen ersten Auslegerarm (41) nacheilender Auslegerarm (45, 46) im Bereich der Schneid-Klemmeinrichtung (53, 55) angehalten wird und durch Rückwärtsdrehung des ersten Auslegerarmes (41) in eine zu diesem benachbarte Stellung verschwenkt, in der beide Folien (34, 37 und 35, 36) gemeinsam von einer Schneid-Klemmeinrichtung (53, 54) gehalten werden.

17. Verfahren nach Anspruch 14, **dadurch gekennzeichnet, dass** bei Beendigung des Umhüllvorganges zwei aufeinander folgende Auslegerarme (6, 5) vorher zusammen geschwenkt und dann gemeinsam in die Schneid-Klemmvorrichtung (18) gefahren werden.

18. Verfahren nach Anspruch 14, **dadurch gekennzeichnet, dass** nach Start des Umhüllvorganges zunächst der erste Auslegerarm (41, 68) losfährt und dann der zweite Auslegerarm (45, 46, 69) bei einem vorbestimmten Winkelabstand zum ersten Auslegerarm (41) mitgenommen wird oder dass beide Auslegerarme (6, 5) anfahren und während der ersten Umdrehung den vorbestimmten Winkelabstand zueinander einstellen.

## Claims

1. Device for wrapping articles (2, 38, 63) with film (16, 17, 35, 37, 90, 91), comprising an at least two-armed extension arm (6, 7, 41, 68) that can be driven in rotation around the articles (2, 38, 63) about an axis of rotation (10, 33, 81) and which carries at each arm end at least one roll of film (4, 9, 43, 44, 64, 65), **characterised in that** at least one extension arm (5, 45, 46, 69) can be adjusted relative to one or more extension arm(s) (6, 7, 41, 68).

2. Device according to claim 1, **characterised in that** one or more extension arm(s) (5, 69) is/are configured by means of at least one articulation so as to be adjustable in the circumferential direction about a pivot axis coaxial with the axis of rotation (10, 81).

3. Device according to claim 1 or 2, **characterised in that** one or more extension arm(s) (45, 46) is/are configured by means of at least one articulation so as to be adjustable in the circumferential direction about a pivot axis (47, 48) parallel to the axis of rotation (33).

4. Device according to any one or more of the preceding claims, **characterised in that** the adjusting movement of one or more extension arm(s) (41, 45, 46, 68, 69) is derived directly or indirectly from at least one rotary drive motor (81).

5. Device according to any one or more of the preceding claims, **characterised by** means for reversing the direction of rotation of one or more extension arm(s) (41, 45, 46).

6. Device according to any one or more of the preceding claims, **characterised in that** for adjusting at least one extension arm (5, 45, 46, 68, 69) relative to one or more extension arms (6, 41, 68, 69), a mechanical, hydraulic (13, 81), electrical and/or pneumatic actuator is provided.

7. Device according to any one or more of the preceding claims, **characterised in that** an energy store (49, 50) and/or a damping element is/are provided between pivotal (5, 45, 46) and fixed extension arms (6, 7, 41).

8. Device according to any one or more of the preceding claims, **characterised in that** a coupling element, a ratchet mechanism (72 to 79), a gearing and/or a freewheel is/are provided in the drive of one or more extension arm(s) (68, 69).

9. Device according to any one or more of the preceding claims, **characterised in that** at least one extension arm (5, 45, 46, 69) comprises stop (13, 49, 50, 61, 62, 84, 85) and/or locking means (73, 74) for limiting its adjustment movement in at least one direction of rotation relative to one or more extension arm(s) (6, 7, 41, 68).

10. Device according to any one or more of the preceding claims, **characterised in that** at least one adjustable and one fixed extension arm can be securely locked in the pivoted-together state by means of a locking element in order to wind and unload the bales during an emergency operation.

11. Device according to any one or more of the preceding claims, **characterised in that** stop and/or locking means (51, 52, 82, 83) for at least one extension arm (45, 46, 68) are associated with the straight sided frame (42, 100).

12. Device according to any one or more of the preceding claims, **characterised by** a three-armed extension arm (5, 6, 7) with a pivotal extension arm (5).

13. Device according to any one or more of the preceding claims 1 to 11, **characterised by** a four-armed extension arm (41, 45, 46, 68, 69) with two pivotal extension arms (45, 46, 69).

14. Method for wrapping articles (2, 38, 63) with film (16, 35, 37, 90, 91), in which an at least two-armed extension arm (6, 9, 41, 68), which carries at each arm end at least one roll of film (4, 9, 43, 44, 64, 65), is driven in rotation around the articles (2, 38, 63) about an axis of rotation (10, 33, 81), **characterised in that** at least one extension arm (5, 45, 46, 69) is adjusted relative to one or more extension arm(s) (6, 7, 41, 68) at the end of the wrapping operation.

15. Method according to claim 14, **characterised in that** at the end of the wrapping operation a first extension arm (68) is firstly moved in the winding direction of rotation (80) toward a cutting-fixing device (86, 87) for a film (90, 91), then once the first extension arm (68) has stopped, the second extension arm (69) continues to move in the same direction of rotation (80) until it is in a position (92) adjacent to the first extension arm (68) in which two films (90, 91 and 93, 94) are each held by a cutting-fixing device (86, 87).

16. Method according to claim 14, **characterised in that** at the end of the wrapping operation a second extension arm (45, 46) running behind a first extension arm (41), viewed in the direction or rotation (55), is stopped in the region of the cutting-fixing device (53, 55) and by reverse rotation of the first extension arm (41) pivoted into a position adjacent thereto in which both films (34, 37 and 35, 36) are jointly held by a cutting-fixing device (53, 54).

17. Method according to claim 14, **characterised in that** at the end of the wrapping operation two successive extension arms (6, 5) are pivoted together in advance and then moved together into the cutting-fixing device (18).

18. Method according to claim 14, **characterised in that** following the start of the wrapping operation the first extension arm (41, 68) moves first and then the second extension arm (45, 46, 69) is carried along at a predetermined angular spacing from the first extension arm (41) or **in that** both extension arms (6, 5) start and adjust the predetermined angular spacing with respect to each other during the first rotation.

## Revendications

1. Dispositif d'enveloppement d'articles (2, 38, 63) pourvu d'un film, constitué d'une console à deux bras au moins (6, 7, 41, 68) pouvant être entraînée de manière rotative autour d'un film (16, 17, 35, 37, 90, 91) autour d'un axe de rotation (10, 33, 81), laquelle porte un rouleau de film (4, 9, 43, 44, 64, 65) disposé sur chaque extrémité de bras, **caractérisé en ce qu'**au moins un bras de console (5, 45, 46, 69) est réglable par rapport à un ou plusieurs bras de la console (6, 7, 41, 68).

2. Dispositif selon la revendication 1, **caractérisé en ce qu'**un ou plusieurs bras de console (5, 69) est/sont conçu(s) de manière à pouvoir être réglé(s) à l'aide d'au moins une articulation autour d'un axe de pivotement coaxial par rapport à l'axe de rotation (10, 81).

3. Dispositif selon la revendication 1 ou 2, **caractérisé en ce qu'**un ou plusieurs bras de console (45, 46) est/sont conçu(s) de manière réglable à l'aide d'au moins une articulation autour d'un axe de pivotement parallèle à l'axe de rotation (10, 81).

4. Dispositif selon l'une quelconque ou plusieurs des revendications précédentes, **caractérisé en ce que** le mouvement de réglage d'un ou de plusieurs bras de console (41, 45, 46, 68, 69) est dévié directement ou indirectement par au moins un moteur à entraînement rotatif (81).

5. Dispositif selon l'une quelconque ou plusieurs des revendications précédentes, **caractérisé par** des moyens d'inversion du mouvement de rotation d'un ou plusieurs bras de console (41, 45, 46).

6. Dispositif selon l'une quelconque ou plusieurs des revendications précédentes, **caractérisé en ce qu'**un vérin mécanique, hydraulique (13, 81), électrique et/ou pneumatique est prévu pour le réglage d'au moins un bras de console (5, 45, 46, 68, 69) par rapport à un ou plusieurs bras de console (6, 41, 68, 69).

7. Dispositif selon l'une quelconque ou plusieurs des revendications précédentes, **caractérisé en ce qu'**un accumulateur d'énergie (49, 50) et/ou un élément d'amortissement est prévu entre le bras pouvant être basculé (5, 45, 46) et un bras fixe (6, 7, 41).

8. Dispositif selon l'une quelconque ou plusieurs des revendications précédentes, **caractérisé en ce qu'**au moins un élément d'embrayage, un verrouillage à cliquet (72 à 79), un engrenage et/ou une roue libre sont prévus dans l'entraînement d'un ou plusieurs bras de console (68, 69).

9. Dispositif selon l'une quelconque ou plusieurs des revendications précédentes, **caractérisé en ce qu'**au moins un bras de console (5, 45, 46, 69) présente des moyens de butée (13, 49, 50, 61, 62, 84, 85) et/ou de verrouillage (73, 74) pour limiter son mouvement de réglage dans au moins une direction de rotation par rapport à un ou plusieurs bras de console (6, 7, 41, 68).

10. Dispositif selon l'une quelconque ou plusieurs des revendications précédentes, **caractérisé en ce qu'**au moins un bras de console réglable et un bras de console fixe peuvent être fermement verrouillés dans une position obtenue par pivotement conjoint à l'aide d'un élément de verrouillage, afin d'enrouler et de décharger la balle en régime de secours.

11. Dispositif selon l'une quelconque ou plusieurs des revendications précédentes, **caractérisé en ce** des moyens de butée et/ou de verrouillage (51, 52, 82, 83) sont associés au bâti de cadre (42, 100) pour au moins un bras de console (45, 46, 68).

12. Dispositif selon l'une quelconque ou plusieurs des revendications précédentes, **caractérisé par** une console à trois bras (5, 6, 7) pourvue d'un bras de console pivotant (5).

13. Dispositif selon l'une quelconque ou plusieurs des revendications 1 à 11, **caractérisé par** une console à quatre bras (41, 45, 46, 68, 69) pourvue de deux bras de console basculants (45, 46, 69).

14. Procédé pour l'enveloppement d'articles (2, 38, 63) pourvu d'un film (16, 35, 37, 90, 91), au cours duquel au moins une console à deux bras (6, 9, 41, 68) portant un rouleau de film (4, 9, 43, 44, 64, 65) à chaque extrémité de bras est entraînée de manière rotative autour de l'article (2, 38, 53) autour d'un axe de rotation (10, 33, 81), **caractérisé en ce qu'**au moins un bras de console (5, 45, 46, 69) est réglé par rapport à un ou plusieurs bras de console (6, 7, 41, 68) lorsque le processus d'enveloppement est terminé.

15. Procédé selon la revendication 14, **caractérisé en ce que**, lorsque le processus d'enveloppement est terminé, un premier bras de console (68) est tout d'abord amené de la direction de enroulement-rotation (80) vers la direction de serrage-coupe (86, 87) pour un film (91), puis, le deuxième bras de console (69) est déplacé dans la même direction de rotation (80) que le premier et est amené dans une position (92) proche de celle du premier bras de console (68), dans laquelle deux films (90, 91 et 93, 94) sont respectivement maintenus dans un dispositif de serrage-coupe (86, 87).

16. Procédé selon la revendication 14, **caractérisé en ce que**, lorsque le processus d'enveloppement est terminé, un deuxième bras de console (45, 46) poursuivant le premier bras de console (41) dans la direction de rotation (55) est maintenu dans la zone du dispositif de serrage-coupe (53, 54) et est amené par pivotement à l'aide d'une rotation inverse du premier bras de console (41) dans une position proche de celle de ce dernier, dans laquelle deux films (34, 37 et 35, 36) sont maintenus ensemble par un dispositif de serrage-coupe (53, 54).

17. Procédé selon la revendication 14, **caractérisé en ce que**, lorsque le processus d'enveloppement est terminé, deux bras de console se suivant (6, 5) sont dans un premier temps pivotés ensemble, puis sont amenés dans le dispositif de serrage-coupe (18).

18. Procédé selon la revendication 14, **caractérisé en ce que**, après le début du processus d'enveloppement, le premier bras de console (41, 68) se déplace en premier lieu, puis le deuxième bras de console (45, 46, 69) est entraîné à une distance angulaire prédéterminée par rapport au premier bras de console (41), ou **en ce que** les deux bras de console (6, 5) démarrent puis, lors de la première rotation, se positionnent à une distance angulaire prédéterminée l'un par rapport à l'autre.
